# EUROPÄISCHE PATENTSCHRIFT

(11) **EP 2 304 300 B1**
(45) Veröffentlichungstag und Bekanntmachung des Hinweises auf die Patenterteilung: **14.05.2014**
(21) Anmeldenummer: 09772088.2
(22) Anmeldetag: 17.06.2009
(51) Int. Cl.: F16L 33/22, F16L 13/14

(54) **KUNSTSTOFF-SCHIEBEHÜLSE SOWIE ANSCHLUSSFITTING MIT EINER DERARTIGEN SCHIEBEHÜLSE**
PLASTIC SLIDING SLEEVE AND CONNECTING FITTING HAVING SUCH A SLIDING SLEEVE
MANCHON COULISSANT EN PLASTIQUE ET RACCORD MUNI D'UN TEL MANCHON COULISSANT

(30) Priorität: 30.06.2008 DE 202008008554 U
(43) Veröffentlichungstag der Anmeldung: 06.04.2011
(73) Patentinhaber: Rehau AG + Co, 95111 Rehau (DE)
(72) Erfinder: BONHAG, Ehrenfried, 91126 Schwabach (DE); HAUNSTETTER, Karl-Heinz, 90768 Fürth (DE)
(86) Internationale Anmeldenummer: PCT/EP2009/004346
(87) Internationale Veröffentlichungsnummer: WO 2010/000388

(56) Entgegenhaltungen:
- WO-A-03/089797

## Beschreibung

Die Erfindung betrifft eine Kunststoff-Schiebehülse für einen Anschlussstutzen zur insbesondere druckdichten Verbindung eines Rohrs mit dem Anschlussstutzen. Ferner betrifft die Erfindung ein Anschlussfitting mit einem Anschlussstutzen sowie einer derartigen Schiebehülse.

Eine Kunststoff-Schiebehülse für einen Anschlussstutzen zur Rohrverbindung ist durch offenkundige Vorbenutzung bekannt. Bei dem bekannten Anschlussfitting kommt es bei extremen Bedingungen zu einer unerwünschten axialen Relativbewegung zwischen der Schiebehülse einerseits und dem verpressten bzw. verklemmten Rohr-Endabschnitts andererseits.

Aus der WO 03 089 797 ist eine Kunststoff-Schiebehülse bekannt, die alle Merkmale des Oberbegriffs des Anspruchs 1 aufweist.

Es ist eine Aufgabe der vorliegenden Erfindung, eine Kunststoff-Schiebehülse der eingangs genannten Art derart weiterzubilden, dass eine derartige, unerwünschte Relativbewegung in der Praxis vermieden ist.

Diese Aufgabe ist erfindungsgemäß gelöst durch eine Kunststoff-Schiebehülse mit den im Anspruch 1 angegebenen Merkmalen.

Erfindungsgemäß wurde erkannt, dass eine über den Innenumfang der Schiebehülse überstehende Umfangsrippe zur gewünschten Sicherung gegen eine Relativbewegung der Schiebehülse zum Rohr-Endabschnitt führt. Die Umfangsrippe kann sich in die Außenwand des Rohr-Endstücks einarbeiten. Gleichzeitig erlaubt eine derartige Umfangsrippe weiterhin die Herstellung der Schiebehülse als Spritzgussbauteil, ohne dass hierzu eine komplizierte Ausführung eines Spritzgusswerkzeugs erforderlich ist, da die Umfangsrippe im Bereich einer ohnehin notwendigen Kerntrennungsebene des Spritzgusswerkzeugs ausgeführt sein kann. Die Spritzgussform bleibt dann hinterschneidungsfrei.

Dies stellt einen erheblichen Herstellungskostenvorteil im Vergleich zu Hinterschneidungen aufweisenden Innenprofilierungen von Schiebehülsen dar, wie sie beispielsweise aus der DE 38 13 815 C2 bekannt sind. Bei einer solchen Auslegung des Spritzgusswerkzeugs, bei der die Umfangsrippe durch komplementäre Anfasungen der sich in der Kerntrennungsebene gegenüberstehenden Stirnbereiche der Werkzeughälften erzeugt wird, kann sogar eine verbesserte Standzeit des Spritzgusswerkzeugs resultieren, da aufgrund der Anfasung der Werkzeughälften eine bessere Verschleißfestigkeit der Stirnwände der Werkzeughälften im Bereich der Kerntrennungsebene vorliegt.

Querschnittsformen nach Anspruch 2 lassen sich kostengünstig fertigen.

Ein kantenfreier Querschnittsverlauf nach Anspruch 3 erleichtert ein Aufschieben der Schiebehülse auf das Rohr-Endstück.

Eine Unterteilung der Umfangsrippe nach Anspruch 4 führt insbesondere dann, wenn das Rohr, auf das die Schiebehülse aufgeschoben wird, keine perfekt runde Außenwand aufweist, zu einer Erleichterung beim Aufschieben. Durch Verdrehen der Schiebehülse auf dem Rohr kann eine Position gefunden werden, bei der die Umfangs-Rippenabschnitte Bereichen des Rohrs mit gegenüber sonstigen Umfangsbereichen verringertem Durchmesser zugewandt sind. Die Umfangs-Rippenabschnitte können auf der gleichen axialen Höhe vorliegen, können aber auch zusätzlich zum Versatz in Umfangsrichtung axial versetzt zueinander angeordnet sein. Alternativ zur Unterteilung in Umfangs-Rippenabschnitte kann eine vollständig insbesondere mit konstantem Querschnitt umlaufende Umfangsrippe vorgesehen sein.
Ein kontinuierlicher Überstandsverlauf nach Anspruch 5 verhindert, dass die Schiebehülse im Bereich von Umfangsstufen beim Aufschieben an der Außenwand des Rohrs hängen bleibt.

Ein konstanter Überstand nach Anspruch 6 lässt sich einfach fertigen.

Überraschend haben sich geringe Überstände nach Anspruch 7 als ausreichend zur Herbeiführung der gewünschten Axialsicherung herausgestellt. Insbesondere kann der Überstand maximal 150 µm, maximal 100 µm, maximal 80 µm oder sogar maximal 30 µm betragen.

Die Vorteile eines Anspruchsfittings nach Anspruch 8 entsprechen denen, die vorstehend unter Bezugnahme auf die Schiebehülse erläutert wurden.

Ausführungsbeispiele der Erfindung werden nachfolgend anhand der Zeichnung näher erläutert. In dieser zeigen:
- Fig. 1: ein Anschlussfitting mit einem Anschlussstutzen und einer Kunststoff-Schiebehülse in einer Ausgangsposition, in der ein auf den Anschlussstutzen aufgeschobenes Schlauch-Endstück noch unverklemmt vorliegt;
- Fig. 2: eine Vergrößerung des Details II in Fig. 1;
- Fig. 3: das Anschlussfitting mit dem Schlauch-Endstück von Fig. 1 mit gegenüber der Ausgangsposition in eine Klemmposition verlagerter Schiebehülse;
- Fig. 4: eine Vergrößerung des Details IV in Fig. 3;
- Fig. 5: eine stirnseitige Ansicht der Schiebehülse;
- Fig. 6: einen Schnitt gemäß Linie VI-VI in Fig. 5;
- Fig. 7: eine Vergrößerung des Details VII in Fig. 6;
- Fig. 8: eine zu Fig. 5 ähnliche Ansicht einer weiteren Ausführung einer Schiebehülse zum Einsatz mit dem Anschlussstutzen nach Fig. 1;
- Fig. 9: einen Schnitt gemäß Linie IX-IX in Fig. 8;
- Fig. 10: eine Vergrößerung des Details X in Fig. 9; und
- Fig. 11 bis 13: zu den Fig. 8 bis 10 ähnliche Darstellungen einer weiteren Ausführung einer Schiebehülse zum Einsatz mit dem Anschlussstutzen nach Fig. 1.

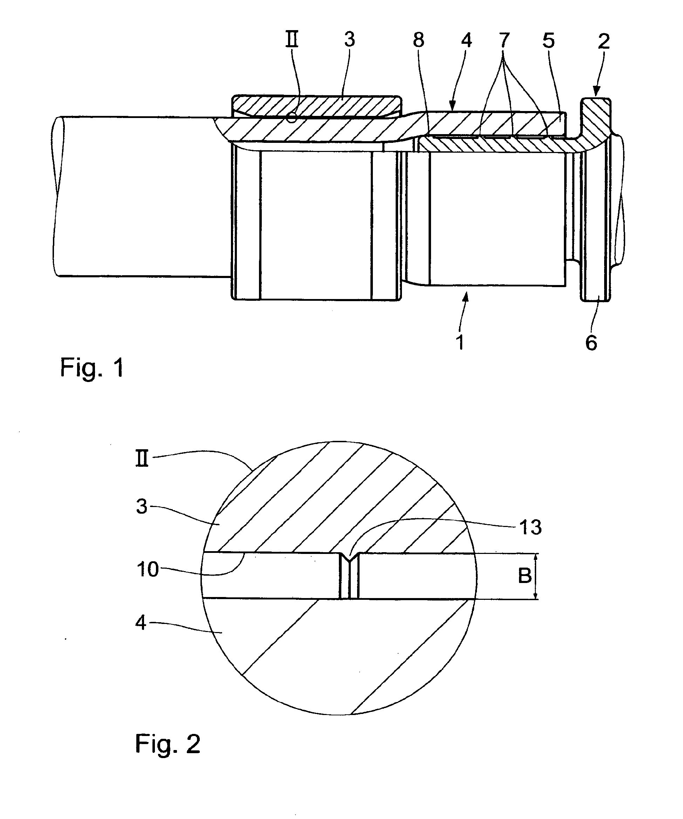

Fig. 1 zeigt ein Anschlussfitting 1 mit einem Anschlussstutzen 2 und einer Schiebehülse 3. Das Anschlussfitting 1 gewährleistet einen sicheren und insbesondere druckdichten Anschluss eines Rohrs 4 am Anschlussstutzen 2. Fig. 1 zeigt das Anschlussfitting 1 in einer Ausgangsposition der Schiebehülse, in der ein Rohr-Endstück 5, das auf den Anschlussstutzen 2 aufgeschoben ist, noch unverklemmt vorliegt.

Die Schiebehülse 3 ist aus Kunststoff. Bei der dargestellten Ausführung ist die Schiebehülse 3 aus Polyvinylidenfluorid (PVDF). Auch ein anderes hochfestes Polymermaterial kann zur Ausbildung der Schiebehülse 3 herangezogen werden. Der Anschlussstutzen 2 kann auch aus PVDF gefertigt sein. Bei der dargestellten, bevorzugten Ausführung ist der Anschlussstutzen 2 aus Polyphenylsulfon (PPSU). Alternativ kann der Anschlussstutzen 2 auch aus Metall gefertigt sein, beispielsweise aus Messing oder aus Stahl. Beim Rohr 4 kann es sich um ein insbesondere armiertes Kunststoffrohr oder um ein Metall-KunststoffVerbund (MKV-)Rohr handeln. Materialbeispiele für das Rohr 4 sind vernetztes Polyethylen (PE-X) oder Polybutylen (PB).

Der Anschlussstutzen 2 ist in der Fig. 1 gebrochen lediglich soweit dargestellt, wie es zur Beschreibung des druckdichten Rohranschlusses erforderlich ist. In der Fig. 1 rechts von einem Anschlagbund 6, der das Aufschieben des Rohrs 4 auf den Anschlussstutzen 2 begrenzt, kann der Anschlussstutzen beispielsweise in einen weiteren Anschlussstutzen zum Aufschieben eines weiteren Rohrs 4 oder in eine Montagefortsetzung, beispielsweise in ein Schraubgewinde, übergehen. Als Fortsetzungsvarianten des Anschlussstutzens 2 sind auch ein 90°-Eckverbinder oder ein T-Stück möglich.

An seiner äußeren Umfangswand, der Innenwand des aufgeschobenen Rohr-Endstücks 5 zugewandt, weist der Anschlussstutzen 2 mehrere axial zueinander beabstandete Umfangsrippen 7 auf. An seinem vom Anschlagbund 6 abgewandten freien Ende vergrößert sich der äußere Umfang des Anschlagstutzens 2 in einem Endbereich 8 zunächst stufenförmig und läuft dann zum Ende hin sich konisch verjüngend aus, was das Aufschieben des Rohr-Endstücks auf den Anschlussstutzen 2 erleichtert.

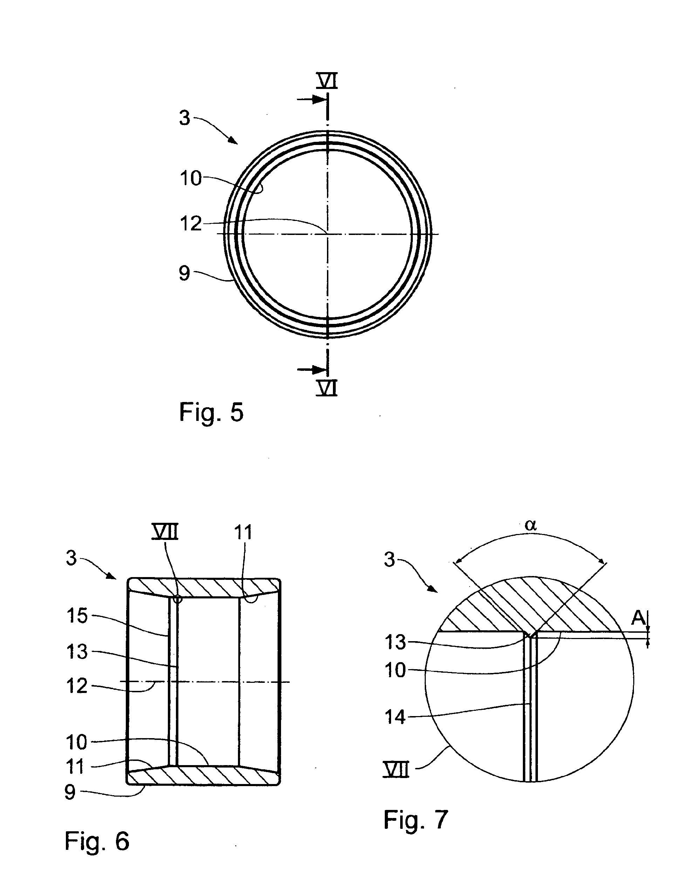

Stärker im Detail ist die Schiebehülse 3 in den Fig. 5 bis 7 dargestellt. Die Schiebehülse 3 hat eine glatte, zylindrische äußere Umfangswand 9. Eine inneren Umfangswand der Schiebehülse 3 ist axial unterteilt in einem Mittelabschnitt 10 sowie sich zu den Enden der Schiebehülse 3 in axialer Richtung erweiternden Konusabschnitten 11.

Je nach Ausführung der Schiebehülse 3 kann die Erstreckung der Konusabschnitte 11 längs einer Längsachse 12 der Schiebehülse 3, die gleichzeitig eine Rotations-Symmetrieachse von dieser darstellt, variieren. Auch der Konuswinkel der Konusabschnitte 11 kann sich bei verschiedenen Ausführungen der Schiebehülse 3 unterscheiden.

Der Mittelabschnitt 10 der Innenwand der Schiebehülse 3 hat eine über die sonstige Innenwand nach innen, also zur Längsachse 12 hin, überstehende Umfangsrippe 13. Bei der Ausführung nach den Fig. 1 bis 7 verläuft die Umfangsrippe 13 über den gesamten Innenumfang der Schiebehülse 3. Die Umfangsrippe 13 hat einen in Umfangsrichtung gleichbleibenden dreieckigen Querschnitt (vgl. Fig. 7). Ein Apexwinkel a der Umfangsrippe 13 beträgt 90°. Auch andere Apexwinkel sind möglich. Ein Überstand A der Umfangsrippe 13 über den Mittelabschnitt 10 der Innenwand der Schiebehülse 3 beträgt 70 µm. Die Umfangsrippe 13 hat in Umfangsrichtung einen konstanten Überstand A über den Mittelabschnitt 10 der Innenwand der Schiebehülse 3.

Die Schiebehülse 3 ist ein Kunststoff-Spritzgussbauteil. In der Fig. 7 ist eine Kerntrennungsebene 14 angedeutet, die die Trennung zweier Werkzeughälften einer hinterschneidungsfreien Spritzgussform zur Spritzgussherstellung der Schiebehülse 3 wiedergibt. Der umlaufende Scheitel der Umfangsrippe 13 verläuft in der Kerntrennungsebene 14.

Die Umfangsrippe 13 verläuft, was ihre Axialposition längs der Längsachse 12 angeht, nicht mittig im Mittelabschnitt 10 der Innenwand der Schiebehülse 3, sondern außermittig nahe eines Übergangs 15 zwischen dem Mittelabschnitt 10 und dem in der Fig. 6 linken Konusabschnitt 11. Auch eine mittige Anordnung der Umfangsrippe 13 ist möglich.

Die Ausschnittsvergrößerung nach Fig. 2 zeigt, dass in der Ausgangsposition zwischen der Umfangsrippe 13 und dem sonstigen Mittelabschnitt 10 der Schiebehülse 3 einerseits und dem Rohr 4 andererseits ein Spiel B vorliegt, welches um ein Mehrfaches größer ist als der Überstand A. Dieses Spiel liegt zwischen der Schiebehülse 3 und dem Rohr 4 dort vor, wo das Rohr 4 nicht auf den Anschlussstutzen 2 aufgeschoben ist.

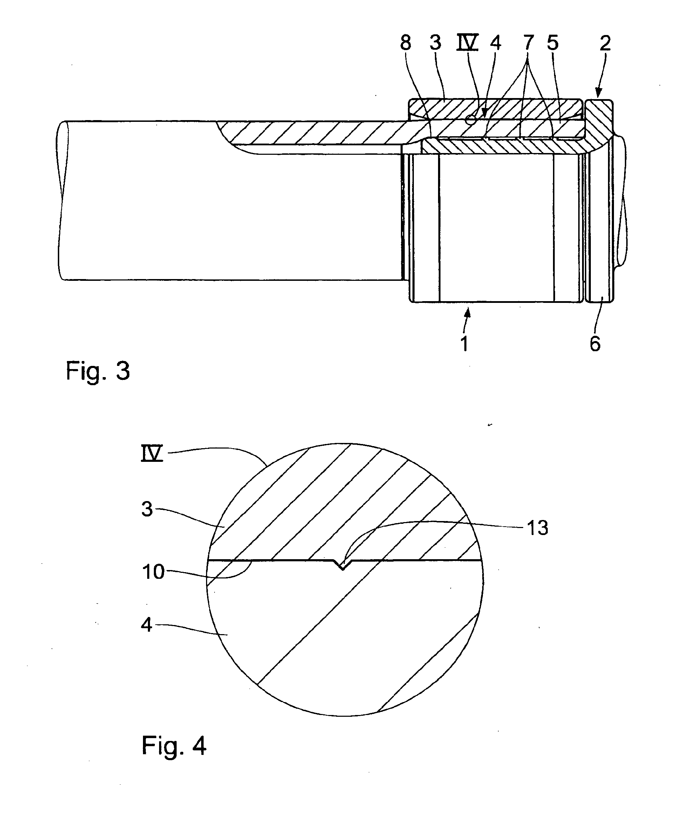

Fig. 3 und 4 zeigen eine Klemmposition des Anschlussfittings 1. Mit einem entsprechenden Werkzeug ist die Schiebehülse 3 von der Ausgangsposition nach Fig. 1 nach rechts auf den Anschlussstutzen 2 aufgeschoben.

Ein radialer Abstand zwischen der Schiebehülse 3 und dem Anschlussstutzen 2 ist kleiner als eine Wandstärke des Rohr-Endstücks 5, so dass letzteres zwischen dem Anschlussstutzen 2 und der Schiebehülse 3 geklemmt bzw. verpresst wird. Dabei arbeitet sich (vgl. Fig. 4) die Umfangsrippe 13 in die Außenwand des Rohr-Endstücks 5 ein. Die Umfangsrippe 13 sichert also gemeinsam mit den Umfangsrippen 7 und dem umfangsvergrößerten Endbereich 8 des Anschlussstutzens 2 das Rohr-Endstück 5 gegen eine axiale Verlagerung relativ zum Anschlussfitting 1 einerseits und relativ zur Schiebehülse 3 andererseits.

Alternativ zu einem dreieckigen Querschnitt kann die Umfangsrippe 13 auch eine andere Querschnittsform haben, beispielsweise einen rechteckigen Querschnitt oder einen kantenfrei verlaufenden Querschnitt.

Das Anschlussfitting 1 ist für ein Rohr 4 mit der Nennweite 40 mm ausgelegt. Alternative Ausgestaltungen für andere Nennweiten unterscheiden sich vom beschriebenen Aufbau lediglich in ihren Abmessungen sowie gegebenenfalls im Verhältnis der Axialerstreckungen des Mittelabschnitts 10 zu den Konusabschnitten 11 der Innenwand.

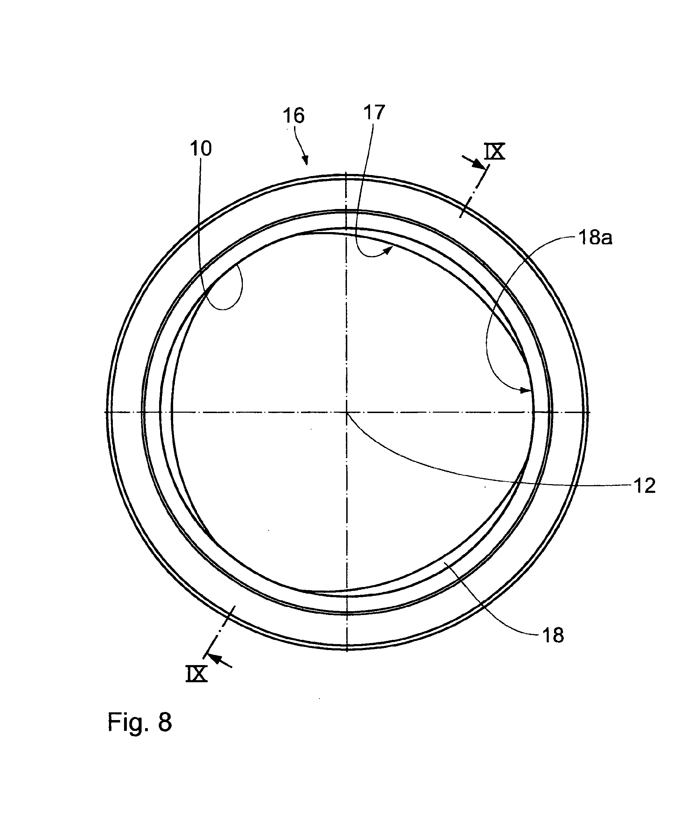

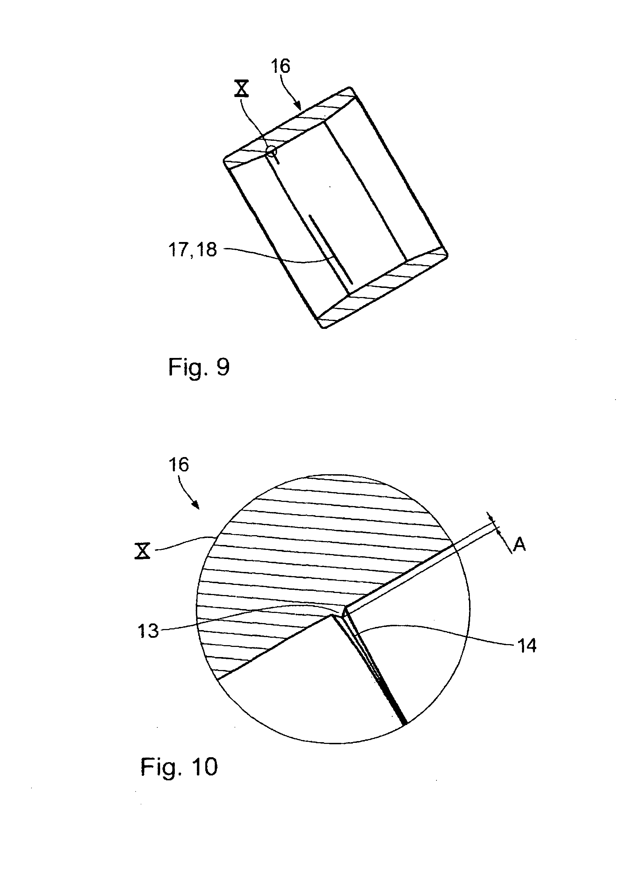

Fig. 8 bis 10 zeigen eine weitere Ausführung einer Schiebehülse 16, die anstelle der Schiebehülse 3 beim Anschlussfitting 1 nach den Fig. 1 bis 7 zum Einsatz kommen kann. Komponenten, die denjenigen entsprechen, die vorstehend unter Bezugnahme auf die Fig. 1 bis 7 bereits erläutert wurden, tragen die gleichen Bezugsziffern und werden nicht nochmals im Einzelnen diskutiert.

Die Schiebehülse 16 hat eine Umfangsrippe 17, die, was ihre radiale Erstreckung angeht, in der Fig. 8 stark überhöht und nicht maßstabsgetreu dargestellt ist.

Die Umfangsrippe 17 ist in drei Umfangs-Rippenabschnitte 18 unterteilt. Jeder Umfangs-Rippenabschnitt 18 überdeckt einen Umfangswinkel um die Längsachse 12 von 90°. Zwischen den Umfangsabschnitten 18 liegt jeweils ein rippenfreier Umfangsabschnitt 18a mit einer Umfangserstreckung von 30° vor. Die drei Umfangs-Rippenabschnitte 18 liegen also in Umfangsrichtung zueinander versetzt und in axialer Richtung auf gleicher Höhe vor. Bei einer nicht dargestellten Ausführung können die Umfangs-Rippenabschnitte 18 auch in axialer Richtung zueinander versetzt angeordnet sein.

In Umfangsrichtung um die Längsachse 12 haben die Umfangs-Rippenabschnitte 18 einen kontinuierlichen Verlauf ihres Überstandes über den Mittelabschnitt 10 der Innenwand der Schiebehülse 16. In Umfangsrichtung gesehen von der jeweiligen Mitte eines Umfangs-Rippenabschnitts 18 fällt dieser Überstand, ausgehend von einem mittigen Überstands-Maximum mit einem Überstand von beispielsweise 80 µm zu den Rändern der Umfangs-Rippenabschnitte 18 hin in Umfangsrichtung kontinuierlich bis auf Null ab.

Die Umfangs-Rippenabschnitte 18 entstehen beim Spritzgießen in entsprechend komplementär geformten Zwischenräumen zwischen den Werkzeughälften im Bereich der Kerntrennungsebene 14. Diese Zwischenräume werden durch schräges Anfasen der einander in der Kerntrennungsebene 14 gegenüberliegenden Stirnwände der Werkzeughälften ausgeformt.

Die Unterteilung der Umfangsrippe 17 in die Umfangs-Rippenabschnitte 18 erleichtert ein Aufschieben der Schiebehülse 16 auf das Rohr 4 insbesondere dann, wenn das Rohr 4, was seinen äußeren Querschnitt angeht, nicht perfekt rund ist.

Anstelle von drei Umfangs-Rippenabschnitten 18 können auch zwei, vier, fünf oder noch mehr Umfangs-Rippenabschnitte vorgesehen sein.

Auch ein anderer Überstand der Umfangs-Rippenabschnitte 18 über den Mittelabschnitt 10 der Innenwand der Schiebehülse 16 ist möglich, beispielsweise ein Überstand von 30 µm.

Bei einer nicht dargestellten und zur Ausführung nach den Fig. 8 bis 10 alternativen Gestaltung der Umfangs-Rippenabschnitte 18 haben diese in Umfangsrichtung um die Längsachse 12 einen konstanten Überstand über den Mittelabschnitt 10 der Innenwand der Schiebehülse 16. Jeweils dort, wo die Umfangs-Rippenabschnitte 18 in die rippenfreien Abschnitte 18a übergehen, liegt dann eine Stufe in Umfangsrichtung vor.

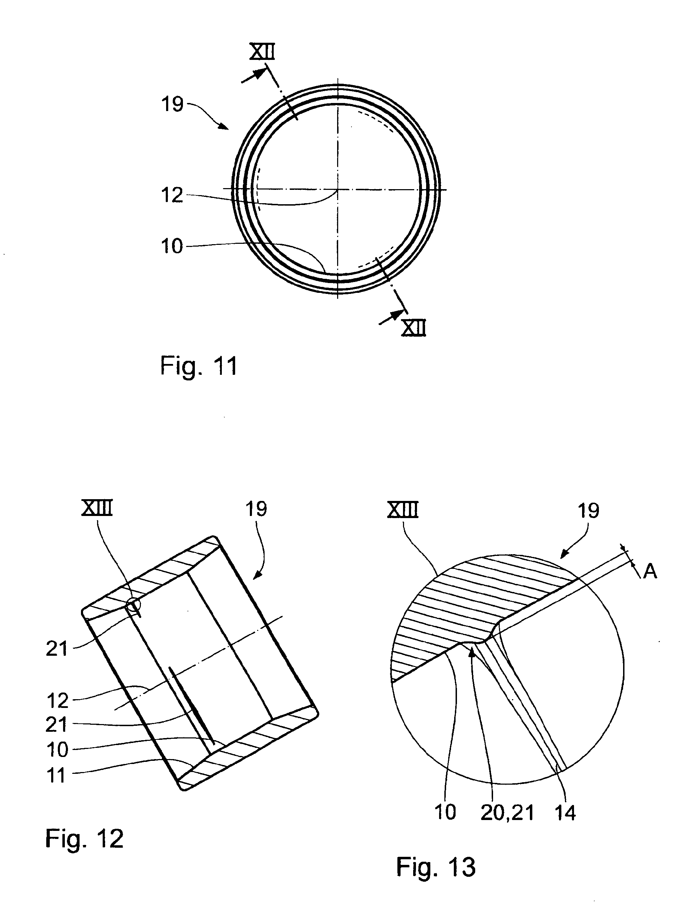

Fig. 11 bis 13 zeigen eine weitere Variante einer Schiebehülse 19. Komponenten, die denjenigen entsprechen, die vorstehend unter Bezugnahme auf die Fig. 1 bis 10 erläutert wurden, tragen die gleichen Bezugsziffern und werden nicht nochmals im Einzelnen diskutiert.

Die Schiebehülse 19 hat eine Umfangsrippe 20, die entsprechend der Umfangsrippe 17 der Ausführung nach den Fig. 8 bis 10 ebenfalls in drei Umfangs-Rippenabschnitte 21 unterteilt ist. Im Unterschied zum dreieckigen Querschnitt der Umfangsrippe 17 mit 90° Apexwinkel haben die Umfangs-Rippenabschnitte 21 einen kantenfrei verlaufenden Querschnitt, so dass die Umfangsrippe 20 als Umfangswulst gestaltet ist. Dieser Querschnittsverlauf wird durch eine entsprechend komplementäre Gestaltung der Werkzeughälften im Bereich der Kerntrennungsebene 14 erzeugt. Der kantenfrei verlaufende Querschnitt der Umfangsrippe 20 erleichtert das Aufschieben der Schiebehülse 19 auf das Rohr 4 nochmals.

Der maximale Überstand A der Umfangs-Rippenabschnitte 21 über den Mittelabschnitt 10 der Schiebehülse 19 beträgt bei der Ausführung nach den Fig. 11 bis 13 150 µm.

## Patentansprüche

1. Kunststoff-Schiebehülse (3; 16; 19) zum Aufschieben auf einen Anschlussstutzen (2) und zum klemmenden Festlegen eines Rohr-Endstücks (5) am Anschlussstutzen (2) in einer Klemmposition
- mit einer Innenwand (10, 11), die in der Klemmposition zumindest abschnittsweise an einer Außenwand des Rohr-Endstücks (5) anlegbar ist,
- wobei die Innenwand (10, 11) mindestens eine über die sonstige Innenwand (10, 11) nach innen überstehende Umfangsrippe (13; 17; 20) aufweist, die zumindest über einen Abschnitt eines Innenumfangs der Schiebehülse (3; 16; 19) verläuft,
**dadurch gekennzeichnet, dass** der maximale Überstand der Umfangsrippe (13; 17; 20) über die Innenwand (10, 11) der Schiebehülse (3; 16; 19) maximal 200 µm beträgt.

2. Schiebehülse nach Anspruch 1, **dadurch gekennzeichnet, dass** die Umfangsrippe (13; 17) einen dreieckigen oder einen rechteckigen Querschnitt aufweist.

3. Schiebehülse nach Anspruch 1, **dadurch gekennzeichnet, dass** die Umfangsrippe (20) einen kantenfrei verlaufenden Querschnitt aufweist.

4. Schiebehülse nach einem der Ansprüche 1 bis 3, **dadurch gekennzeichnet, dass** die Umfangsrippe (17; 20) in mehrere, insbesondere in mehr als zwei, bevorzugt in drei, in Umfangsrichtung zueinander versetzt angeordnete Umfangs-Rippenabschnitte (18; 21) unterteilt ist.

5. Schiebehülse nach Anspruch 4, **dadurch gekennzeichnet, dass** die Umfangs-Rippenabschnitte (18; 21) in Umfangsrichtung einen kontinuierlichen Verlauf ihres Überstandes über die Innenwand (10, 11) aufweisen.

6. Schiebehülse nach Anspruch 4, **dadurch gekennzeichnet, dass** die Umfangs-Rippenabschnitte (18; 21) in Umfangsrichtung einen konstanten Überstand über die Innenwand (10, 11) aufweisen.

7. Anschlussfitting (1)
- mit einem Anschlussstutzen (2), auf den ein Rohr (4) aufschiebbar ist,
- mit einer Schiebehülse nach einem der Ansprüche 1 bis 6 zum Aufschieben auf den Anschlussstutzen (2) und zum klemmenden Festlegen eines Rohr-Endstücks (5) am Anschlussstutzen (2) in einer Klemmposition.

## Claims

1. Plastics sliding sleeve (3; 16; 19) for pushing onto a connection stub (2) and for securing a pipe end piece (5) to the connection stub (2) in a clamped position by clamping,
- having an inner wall (10, 11), which is at least sectionally placeable against an outer wall of the pipe end piece (5) in the clamped position,
- wherein the inner wall (10, 11) has at least one circumferential rib (13; 17; 20) that projects inwardly beyond the rest of the inner wall (10, 11) and extends at least over a section of an inner circumference of the sliding sleeve (3; 16; 19),
**characterized in that** the maximum projection of the circumferential rib (13; 17; 20) beyond the inner wall (10, 11) of the sliding sleeve (3; 16; 19) is at most 200 µm.

2. Sliding sleeve according to Claim 1, **characterized in that** the circumferential rib (13; 17) has a triangular or a rectangular cross section.

3. Sliding sleeve according to Claim 1, **characterized in that** the circumferential rib (20) has a cross section that extends in an edge-free manner.

4. Sliding sleeve according to one of Claims 1 to 3, **characterized in that** the circumferential rib (17; 20) is subdivided into a plurality of, in particular into more than two, preferably into three, circumferential rib sections (18; 21) that are arranged in an offset manner with respect to one another in the circumferential direction.

5. Sliding sleeve according to Claim 4, **characterized in that** the circumferential rib sections (18; 21) have a continuous profile of their projection beyond the inner wall (10, 11) in the circumferential direction.

6. Sliding sleeve according to Claim 4, **characterized in that** the circumferential rib sections (18; 21) have a constant projection beyond the inner wall (10, 11) in the circumferential direction.

7. Connection fitting (1)
- having a connection stub (2), onto which a pipe (4) is pushable,
- having a sliding sleeve according to one of Claims 1 to 6 for pushing onto the connection stub (2) and for securing a pipe end piece (5) to the connection stub (2) in a clamped position by clamping.

## Revendications

1. Manchon coulissant en plastique (3 ; 16 ; 19) destiné à être poussé sur une tubulure de raccordement (2) et destiné à la fixation par serrage d'un embout de tube (5) sur la tubulure de raccordement (2) dans une position de serrage
- avec une paroi interne (10, 11) qui peut être appliquée dans la position de serrage au moins en partie contre une paroi externe de l'embout de tube (5),
- la paroi interne (10, 11) présentant au moins une nervure périphérique (13 ; 17 ; 20) dépassant vers l'intérieur au-delà du reste de la paroi interne (10, 11), laquelle s'étend au moins sur une portion d'une périphérie interne du manchon coulissant (3 ; 16 ; 19),
**caractérisé en ce que** le dépassement maximal de la nervure périphérique (13 ; 17 ; 20) au-delà de la paroi interne (10, 11) du manchon coulissant (3 ; 16 ; 19) vaut au maximum 200 µm.

2. Manchon coulissant selon la revendication 1, **caractérisé en ce que** la nervure périphérique (13 ; 17) présente une section transversale triangulaire ou une section transversale rectangulaire.

3. Manchon coulissant selon la revendication 1, **caractérisé en ce que** la nervure périphérique (20) présente une section transversale s'étendant sans arête.

4. Manchon coulissant selon l'une quelconque des revendications 1 à 3, **caractérisé en ce que** la nervure périphérique (17 ; 20) est divisée en plusieurs, notamment en plus de deux, de préférence en trois, portions de nervure périphérique (18 ; 21) disposées de manière décalée les unes des autres dans la direction périphérique.

5. Manchon coulissant selon la revendication 4, **caractérisé en ce que** les portions de nervure périphérique (18 ; 21) présentent dans la direction périphérique une allure continue de leur dépassement au-delà de la paroi interne (10, 11).

6. Manchon coulissant selon la revendication 4, **caractérisé en ce que** les portions de nervure périphérique (18 ; 21) présentent dans la direction périphérique un dépassement constant au-delà de la paroi interne (10, 11).

7. Raccord (1)
- comprenant une tubulure de raccordement (2) sur laquelle un tube (4) peut être poussé,
- comprenant un manchon coulissant selon l'une quelconque des revendications 1 à 6 destiné à être poussé sur la tubulure de raccordement (2) et destiné à la fixation par serrage d'un embout de tube (5) sur la tubulure de raccordement (2) dans une position de serrage.
